(19) **Europäisches Patentamt / European Patent Office / Office européen des brevets**

(11) **EP 4 675 976 A1**

(12) **EUROPEAN PATENT APPLICATION**

(43) Date of publication:
07.01.2026   Bulletin 2026/02

(21) Application number: 24306095.1

(22) Date of filing: 03.07.2024

(51) International Patent Classification (IPC):
*H04L 9/40* (2022.01)      *H04L 9/08* (2006.01)
*H04L 9/32* (2006.01)      *G06F 21/44* (2013.01)
*G06F 21/57* (2013.01)      *G06F 21/60* (2013.01)

(52) Cooperative Patent Classification (CPC):
**H04L 63/061; G06F 21/44; G06F 21/57;
G06F 21/602; H04L 9/0841; H04L 9/0897;
H04L 9/3234; H04L 9/3247; H04L 9/3263;
H04L 63/0823; H04L 63/0853; H04L 63/0892**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **KAPOOR, Pranay**
**MONTREAL, H2X3P7 (CA)**

• **SAKSIK, Remy**
**MONTREAL, HP4P0A3 (CA)**
• **ARGUELLO, Yonatan Alejandro**
**MONTREAL, H3Y2M1 (CA)**
• **MARSEILLE, Francois Xavier**
**78160 MARLY LE ROI (FR)**

(74) Representative: **Grevin, Emmanuel**
**Thales Dis France SAS**
**Intellectual Property Department**
**Avenue du Jujubier, Z.I. Athélia IV**
**13705 La Ciotat (FR)**

(54) **METHOD TO ESTABLISH AN INBOUND AND OUTBOUND SECURE CHANNEL**

(57)    Provided is a method (210, 220) and system to establish a secure channel (108) between a party (1) and a workload (2) when running into a hardware-based trusted execution environment (4) at an instance of a cloud service provider (5). In a first embodiment, the party is responsible for contacting the workload and hence creating an inbound secure channel (108.1). In a second embodiment, the workload is responsible for contacting the party and hence creating an outbound secure channel (108.2). The method implements remote attestation services (107) within existing cloud architectures in a secure manner that assures separation of roles and duties, and also allows the owner to provision secrets in the same attested workload, after having a successful attestation from an independent external attestation service. Other embodiments disclosed.

FIG.1A

**Description**

**TECHNICAL FIELD**

The present invention relates to the technical field of data protection and, namely, to the field of confidential computing thus protecting data in use. More particularly, the present invention allows establishing a general purpose (and authenticated) inbound and outbound secure channel for external 3$^{rd}$ party remote attestation between a party, such as the owner of a software payload or a broker, and the software payload itself when running into a hardware-based trusted execution environment at the instance of a cloud service provider (CSP).

**BACKGROUND**

As more data is moved to the cloud, mobile, or IoT devices, and where processing takes place in remote and difficult to secure locations, the protection of data and applications during execution is increasingly important. Confidential computing refers to cloud computing technology that can isolate data within a protected central processing unit (CPU) while it is being processed. In today's computing, data may exist in three different states: in transit (i.e., data traversing untrusted public or private networks), at rest (i.e., inactive data in storage), and in use (i.e., data being processed while in memory and during computation). Since cryptographic techniques to protect data in transit and at rest have been constantly enhanced and widely deployed thus thwarting threat vectors against network and storage devices, attackers have recently shifted to targeting data-in-use.

Confidential computing is a cloud computing technology that protects data during processing. Whether that technology is software based or hardware based, it is designed to isolate sensitive data in a protected processor enclave while it is being processed. More specifically, the enclave is an isolated region of code and data within the address space for an application.

A secure enclave, also referred to as a security enclave, specifically refers to a hardware-based (HW) enclave for isolation, such as Intel SGX or AMD SEV, and provides a way for applications to run in a protected environment. Only code that runs within the enclave can access data within the same enclave. Security enclaves can be used to create and secure Trusted Execution Environments (TEEs).

Confidential computing thus provides a solution for protecting data in use by using hardware-based Trusted Execution Environments (henceforth HW TEE). The Trusted Execution Environment (TEE) is a secure area of a processor that assures data integrity, data confidentiality, and code integrity. It is used to store and execute sensitive data and code, protecting the sensitive information and code from being accessed by unauthorized parties or modified in any way. As mentioned above, HW TEE uses hardware-backed techniques to provide increased security guarantees for the execution of code and protection of data within that environment.

HW TEE basically provides security though the lowest layer of hardware, down to the silicon components, with a minimum of dependencies, by removing the operating system, device driver and peripheral vendors from the list of required trusted parties, thereby reducing exposure to potential compromise. Examples of HW TEE chip providers are Intel with Software Guard Extensions (Intel SGX) and Trust Domain Extensions (Intel TDX), or AMD with Secure Encrypted Virtualization (SEV-SNP).

Service providers or cloud service providers (CSP) such as Amazon Web Services (AWS), Google Cloud Platform (GCP), Microsoft Azure (Azure), OVHCloud, or AlibabaCloud normally comprise one or several HW TEE in their infrastructure in order to offer to their customers the means to run applications and use confidential computing for their workload(s). These customers (henceforth "owners") own piece(s) of code or data (hence "workload") that they wish to execute on computing resources in the CSP infrastructure.

Nevertheless, confidential computing services are not available as a simple turnkey solution, especially when contemplating basic security properties and improvements thereon. One of these basic security properties is known as remote attestation or simply "attestation", and is a mechanism to provide a verifiable signature of the running workload provided by the HW TEE and to be verified by either the owner or a 3rd party of trust. This signature is a type of evidence that authenticates the workload, and the workload must be signed by hardware that can be vouched for by a manufacturer (e.g., Intel or AMD). This ensures that the party checking the evidence receives assurance that the workload is authentic and was not generated by malware, a malicious hacker, or other unauthorized parties.

Also however, HW TEEs from different vendors have their own attestation mechanisms (i.e., different technically implemented mechanisms), that are not interoperable amongst themselves and only share a minimum set of security features for the attestation verification. Indeed, all HW TEE default attestation mechanisms ensure that the HW TEE is genuine, and its payload is the expected one (namely, a measurement signature indicating that it was not modified), and further being able to inform others about its current state in processor execution.

Furthermore, in order to prevent replay attacks against the attestation, the attestation mechanism may involve a nonce sent from the owner. In addition to these basic security features, there is no built-in mean to guarantee that any subsequent communication from the owner will occur with the same attested workload (and not a modified one). For instance, if the owner wishes to provision some secret(s) to that workload, he/she will be uncertain if the very same workload is being provisioned with these secret(s) if the attestation was already performed.

Existing solutions presented in patent publications (WO2023/073197, WO2023/073198, WO2023/073200) employ commonly used software stacks of the public cloud to provide the attestation mechanisms. They consider establishment of a secure channel between a party and its workload inside the TEE (and internal to the CSP), but do not fully contemplate technical interface complexities associated with the addition of a 3rd component for remote attestation services external to the CSP, which needs to be securely implemented in current architectures while assuring complete separation of roles and duties through an independent 3rd party.

Moreover, in cloud architectures that offer HW TEE solutions, there is concern with attestation services focused on attesting and verifying only *locally* from within the CSPs own architecture, and usually through different means to assume that the party is trusted (e.g., SGX enclaves, control plane with different root of trust, etc.). The problematic issue here is that a Remote Attestation Service (RAS), or even a Solutions Provider that offers *"remote"* attestation services, still operates within the communication confines of the CSP cloud architecture; that is, the remote attestation interaction is still "local" and "internal" to the CSP with respect to its oversight and closed governance. The current practice does not sufficiently isolate roles amongst parties to ensure separation of duties, a key concept of internal security whereby conflicting application permissions are distributed among multiple parties, in order to decouple the generation of evidence from its verification and to honor the required secure principles of remote attestation.

Thus, there is a need in confidential computing environments for an easier and interoperable solution to implement remote attestation services within existing cloud architectures in a secure manner that assures separation of roles and duties, and also allows the owner to provision secret(s) in the very same attested workload, after having a successful attestation from an independent external attestation service.

## SUMMARY

In some embodiments a computer-implemented method is provided to establish an inbound secure channel between a party and a workload when running into a hardware-based trusted execution environment (HWTEE) at an instance of a cloud service provider, where the party is responsible for contacting the workload. The method comprising the steps of generating (21), by the party, party public data and a first nonce (NonceParty); sending (22), by the party, the party public data and the first nonce (NonceParty) to the workload; generating (23,24), by the workload, workload public data and a workload key pair comprising a workload public key and a workload private key; signing (25), by the workload, the workload public data with the workload private key thereby producing signed workload public data; mixing (26), by the workload, the workload public key with the first nonce thereby producing a first attestation (AttestationNonce); and requesting (51), by the workload, and then receiving (52) a second nonce (NonceRAS) from an external third party remote attestation service (RAS);

The method further performs steps for computing (28), by a Quoting Enclave of the HW TEE, a quote using at least this second nonce and the Attestation Nonce, and then from the quote, producing a signed workload report (WLQuoteReportSigned) and sending it to the workload; sending (53), by the workload, at least the signed workload report and a request to receive a Custom Token to the RAS for attestation purposes; verifying, by the RAS, the signed workload report before generating the Custom Token that is sent (54) to the workload; sending (30), by the workload, the workload public key, and signed workload data to the party and the Custom Token received from the RAS; mixing (31), by the party, the workload public key with the first nonce (NonceParty) thereby producing a second attestation (Attestation Nonce prime); comparing (32), by the party, the second attestation to the first attestation; verifying (33) the signed workload data using the workload public key; and verifying (55), by the party, a signature of the Custom Token using the first nonce (NonceParty). And, if the comparing is successful, and if the signatures on both the signed workload data and Custom Token are verified, method includes generating (34), by the workload and the party, a session key between them; and establishing (35) an inbound secure channel between the party and the workload running into the HWTEE.

In some embodiments said mixing by the workload and said mixing by the party to produce the first attestation and second attestation, respectively, each perform their own exclusive "or" operation of the first nonce (Nonce Party) with a hash of said public key, as follow: XOR(hash(KpubWL), NonceParty) = AttestationNonce

In some embodiments the Custom Token is a JSON Web Token (JWT), or a JWT-like token, provided by the external third party remote attestation service for attestation, and the method comprises configuring, by the party, a second party to accept the JWT, or JWT-like token; generating, by the party, a token according to policies from the party; signing, by the party, the token; sending, by the party, the signed token to the workload; and storing persistently, by the workload, the JWT, or JWT-like token.

In some embodiments the method includes steps for generating the session key by the workload and the party using a non-authenticated key-agreement protocol such as one based on a Elliptic Curve Diffie-Hellman, ECDH, protocol: generating and sending, by the party, party public data to the workload; generating, by the workload, public data and signing this public data using the private key; sending, by the workload, the public data and the signed public data to the party; verifying, by the party, the signed public data using the received public key; and computing, by the workload and the party, a shared secret using party public data and public data, respectively.

In some embodiments, wherein once the inbound secure channel has been established between the party and the workload running into the HW TEE, the party further provisions the workload with secrets, thereby permitting a later re-opening of the inbound secure channel using the secrets stored by the workload for subsequent communication.

In some embodiments, the workload provides a web-service and the method comprises signing, by the party, a certificate, such as a X.509 certificate private key, and sending, by the party, the signed certificate to the workload which will use the certificate to establish connectivity, such as HTTPS connectivity, to the web-service.

In some embodiments, a computer-implemented method is provided to establish an outbound secure channel between a party and a workload when running into a hardware-based trusted execution environment (HW TEE) at an instance of a cloud service provider, where the workload is responsible for contacting the party. The method comprising the steps of contacting (61), by the workload, the party to request a first nonce (NonceRAS) from an external third party remote attestation service (RAS); generating (21), by the party, a second nonce (NonceParty) and party public data; sending (65), by the party, the second nonce (NonceParty), the party public data and the first nonce (NonceRAS) to the workload; generating (23,24), by the workload, workload public data and a workload key pair comprising a workload public key and a workload private key; signing (25), by the workload, the workload public data with the workload private key thereby producing signed workload public data; mixing (26), by the workload, the workload public key with the first nonce (NonceRAS) and the second nonce (NonceParty) by way of a concatenation operation thereby producing a first attestation (AttestationNonce);

The method further performs steps for computing (28), by a Quoting Enclave of the HW TEE, a quote for the Attestation Nonce, and then from the quote, producing a signed workload report (WLQuoteReportSigned) and sending it to the workload; sending (66), by the workload, at least the signed workload report with other data and a request to receive a Custom Token to the party, forwarding (67), by the party, at least the signed workload report with the other data and the request to receive the Custom Token from the RAS for attestation purposes; mixing (31), by the RAS, the workload public key with the first nonce (NonceRAS) and the second nonce (NonceParty) by way of the concatenation operation thereby producing a second attestation (Attestation Nonce prime); comparing (32), by the RAS, the second attestation to the first attestation; verifying (33), by the RAS, the signed workload data using the workload public key from the other data; sending (68), by the RAS, the Custom Token to the party; and verifying (69), by the party, a signature of the Custom Token using the first nonce (NonceParty). And, if the comparing is successful, and if the signatures on both the signed workload data and Custom Token are verified, it includes sending (70), by the party, the Custom Token to the workload; generating (34), by the workload and the party, a session key between them; and establishing (35) an outbound secure channel between the party and the workload running into the HWTEE.

In some embodiments, other data includes the workload public data, the workload public key, a signature for the workload public data, and the second nonce (NonceParty), and the RAS, after comparing the second attestation to the first attestation, verifies the signature for the workload public data before sending the Custom Token to the party.

In some embodiments, the concatenation operation comprises concatenating the workload public key (KpubWL) with the second nonce (NonceParty) to produce a first output; concatenating the first output with the first nonce (NonceRAS) to produce a second output; performing a HASH of the second output thereby producing the first attestation (AttestationNonce) and the second attestation (AttestationNonce') according to said mixing, respectively.

In some embodiments, the Custom Token is a JSON Web Token (JWT), or a JWT-like token, provided by the external third party remote attestation service for attestation, and the method comprising: configuring, by the party, a second party to accept the JWT, or JWT-like token; generating, by the party, a token according to policies from the party; signing, by the party, the token; sending, by the party, the signed token to the workload; and storing persistently, by the workload, the JWT, or JWT-like token.

In some embodiments, the method includes generating the session key by the workload and the party using a non-authenticated key-agreement protocol such as one based on a Elliptic Curve Diffie-Hellman, ECDH, protocol: generating and sending, by the party, party public data to the workload; generating, by the workload, public data and signing this public data using the private key; sending, by the workload, the public data and the signed public data to the party; verifying, by the party, the signed public data using the received public key; and computing, by the workload and the party, a shared secret using party public data and public data, respectively.

In some embodiments, wherein, once the outbound secure channel has been established between the party and the workload running into the HW TEE, the party further provisions the workload with secrets, thereby permitting a later re-opening of the outbound secure channel using the secrets stored by the workload for subsequent communication.

In some embodiments, the workload provides a web-service that includes signing, by the party, a certificate, such as a X.509 certificate private key, and sending, by the party, the signed certificate to the workload which will use the certificate to establish connectivity, such as HTTPS connectivity, to the web-service.

All the embodiments above can by practiced, or implemented, by a server or computational device, for establishing an inbound or outbound secure channel and related computations or operations, comprising one or more processors, memory, and electronic components coupled to the one or more processors, wherein the memory includes computer instructions which when executed by the one or more processors causes the one or more processors to perform any of the operations of the method steps above, whether, sequentially or non-sequentially in time. Also, all of the embodiments above may be applied singly or in combination with one another.

Advantageously, these inbound and outbound secure channels do not rely on *ad hoc* secure enclave mechanisms of a specific CSP but provide a multi-CSP and interoperable solution suitable for use with external 3rd parties to provide remote attestation services.

In addition, the present invention assures separation of duties by attesting Confidential Computing (CC) environments relying on external remote attestation.

All the features described in this specification (including the claims, description and drawings) and/or all the steps of the described method can be combined in any combination, with the exception of combinations of such mutually exclusive features and/or steps.

## DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.

Figure 1A     This figure shows an embodiment of a system according to the invention comprising a party, and a workload running into a HWTEE;

Figure 1B     This figure illustrates a use case for an inbound secure channel using external 3rd party attestation service, where the party is responsible for contacting the workload;

Figure 1C     This figure illustrates a use case for an outbound secure channel using external 3rd party attestation service, where the workload is responsible for contacting the party;

Figure 2A     This figure shows a sequence flowchart of a method for a system of components to establish an inbound secure channel between a party and the software workload when running into a HW TEE at the instance of a cloud service provider;

Figure 2B     This figure depicts one embodiment of the method in Figure 2A where the party is responsible for contacting the workload;

Figure 3A     This figure shows a sequence flowchart of a method for a system of components to establish an outbound secure channel between a party and the software workload when running into a HW TEE at the instance of a cloud service provider;

Figure 3B     This figure depicts one embodiment of the method in Figure 3A where the workload is responsible for contacting the party;

Figure 4     This figure shows a sequence diagram of an embodiment of a method 400 for a system of components for providing authentication means;

Figure 5     This figure shows a sequence diagram of an embodiment of a method 500 to re-establish a secure and authenticated channel between the party and the software workload;

Figure 6     This figure shows a sequence flowchart of a method 600 to persistently store sensitive data by the workload;

Figure 7     This figure shows a sequence diagram of an embodiment of a method 700 to persistently store sensitive data by the workload;

Figure 8     This figure shows a sequence diagram of an embodiment of a method 800 to retrieve sensitive data persistently stored by the workload; and

Figure 9    This figure shows a sequence diagram of an embodiment of a method to prove to a service provider that the workload has been attested for its further use by way of JWT.

Figure 10   This figure illustrates an example of a computing system suitable for implementing a web authentication username-less authentication protocol accordance with some embodiments

Figure 11   This figure illustrates an example of a storage medium suitable for implementing a web authentication username-less authentication protocol accordance with some embodiments; and

Figure 12   This figure illustrates an example of a computing platform suitable for implementing a web authentication username-less authentication protocol accordance with some embodiments;.

## DETAILED DESCRIPTION

As it will be appreciated by one skilled in the art, aspects of the present invention may be embodied as a method or a system for establishing a secure channel, a method to re-establish the secure channel, a party, a software workload or a HW TEE.

Herein below, it is considered a case in which the method according to the invention for establishing a secure channel is implemented by, locally at a server side, an HW TEE at instances or premises of a cloud service provider.

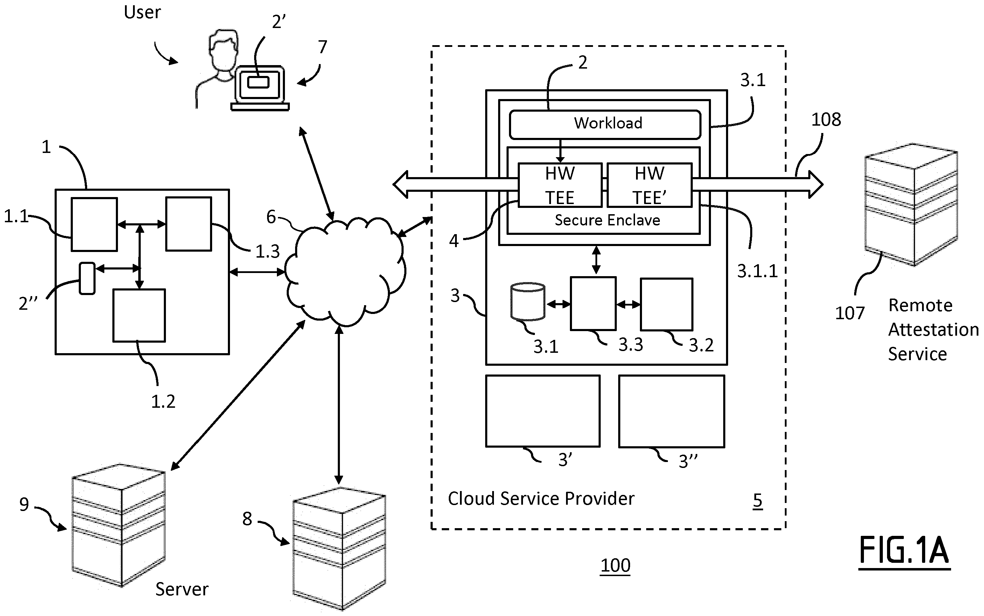

**Figure 1A** depicts schematically a system **100** for the establishment of a secure channel 108 between a party, such as the owner PC 1, 7 or the broker(s) 1, 9, and a software workload 2 running into a HW TEE 4 at the instance or premises of a cloud service provider (CSP) 5. The system **100** comprises the PCs 1, 7, the CSP 5 and the RAS 107, and optionally as needed, servers 8, 9. In a first use-case the secure channel 108 will be an inbound secure channel whereby the party 1, 7 is responsible for contacting the workload 2 for using external 3rd party remote attestation services. In a second use-case the secure channel 108 will be an outbound secure channel whereby the workload 2 is responsible for contacting the party 1, 7 for using external 3rd party remote attestation services.

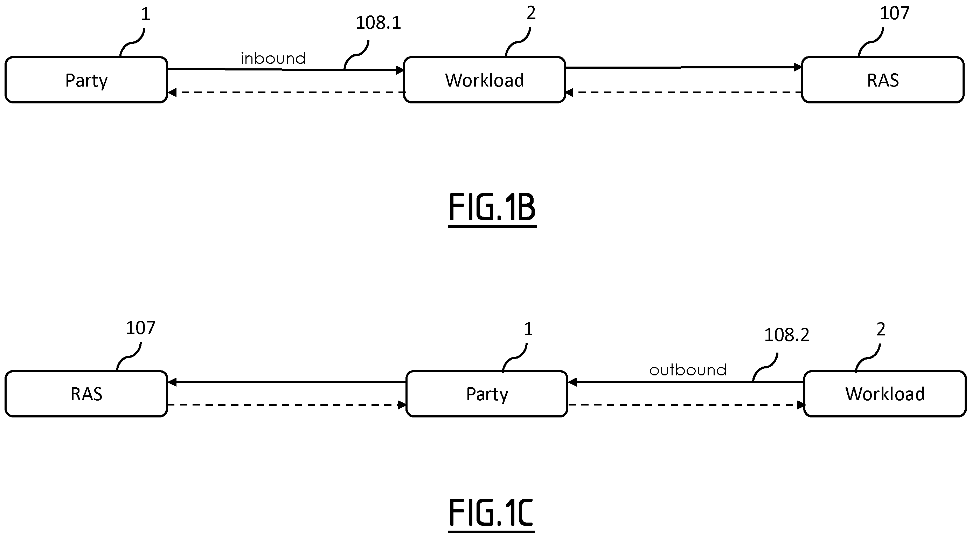

At the CSP end 5, or CSP facilities, one or more computing devices 3, 3', 3", 3‴ with one or more HW TEEs 4, 4' are provided as secure enclave(s) 3.1.1 to process the one or more workloads 2, 2', 2" for confidential computing services. The party 1, 7, when acting as a broker, may be embodied as PC 1 and/or as a single 9 or a collection of interconnected servers. The invention also envisages the presence of a service provider's server 8. The party, or owner (i.e., "owner's device"), is depicted in figure 1 also as a PC 7 operated by a User. The PC 7 may be configured to receive, from the user at least his/her login credentials for at least one of his/her end-user account(s), verify them and let said user to run applications and/or initiate different processes such as sending a code or data (payload of the workload 2', 2") over the communication network 6 as a whole or part (i.e., "trusted portion") of an application to be executed in the HW TEE 4. The workload 2, 2' or 2" can be a trusted portion of code or data from the application, or may itself be separate code or data as a payload related to another application or program.

According to another embodiment, the party (either the workload's owner or another 3rd party of trust such as a broker) is implemented by a PC 7, PC 1 or a server 9, and may also be a SE host device that cooperates with a TEE that is adapted to carry out the functions that are carried out by the party. The invention does not impose any constraint as to a kind of the party's device (so-called "party") or cloud server provider's HW TEE. Examples of party's devices can be a PC, a mobile phone, a server, an IoT device, etc. As mentioned, even if the party may be the workload's owner or a 3rd party of trust such as broker, for illustrative purposes, in the following, the party will be a broker. Once the workload 2 starts in the HW TEE 4, depending on the owner choice (e.g., set by policies), the workload 2 may directly contact the broker 1, 9 or, alternatively, the owner 7 may instruct the broker 1, 9 to contact the workload 2.

In the following, the description about the PC 1 applies to the owner 7 and any or both of the servers 8, 9. The PCs 1 or 7 (or even the server(s) 8, 9) includes one or several (micro)processors (and/or a (micro)controller(s)) 1.1, as data processing means, comprising and/or being connected to one or several memories 1.2, as data storing means, comprising or being connected to means for interfacing with the user, such as a Man Machine Interface (or MMI), and comprising or being connected to an Input/Output (or I/O) interface(s) 1.3 that are internally all connected, through an internal bidirectional data bus. Here also, the PCs 1 or 7 (or even the server(s) 8, 9) may request, on behalf of the user or party, by way of one or more applications, their software workload 2', 2" to run in the HW TEE 4.

The I/O interface(s) 1.3 may include a wired and/or a wireless interface, to exchange, over a contact and/or Contactless (or CTL) link(s), information within the communication network 6; e.g., the user or any other user in charge of the PC 1 or server(s) 8, 9. For example, this may be for requesting execution of workload 2 in the HW TEE 4 if it is hosted in the CSP 5, or delivering a workload 2', 2" to the HW TEE 4 over the communication interfaces and computer network 6, for example, if workload 2' resides in PC 1 or 7, for instance, in encrypted form. Within the present description, the adjective "CTL" denotes notably that the communication means communicates via one or several Short Range (or SR) type Radio Frequency (or RF) links. This allows components within the network 6 to communicate over a Radio Frequency (or RF) link

using standard communication protocols, for example, but not limited to, legacy 2G (CDMA, GSM) and 3G, or LTE 4G and 5G, or wireless communication protocols in the IEEE 802.X family suite.

The PCs 7, 1 may be connected, wired (not represented) or wirelessly, to another device operated either at the owner's instances or at the broker's instances, respectively. That is, the owner 7 may be also embodied as a server device configured to execute data / code, optionally split it into trusted and untrusted portions, and send the trusted portions (e.g., workload 2', 2") to a CSP's HW TEE 4 for its execution or, alternatively, the broker 1, 9 can do it on its behalf. Examples of workloads 2, 2', 2" as highly sensitive data that must be protected and securely processed within the HW TEE 4 include, for example, personally identifiable information (PII), healthcare, financial, or intellectual property data, including, but not limited to proprietary algorithms and code or data associated with one or more applications running on PCs 7, 1 (or even the server(s) 8, 9) and computing devices 3, 3', 3" within the CSP 5.

The PC 7, 1 MMI may include a display screen(s), a keyboard(s), a loudspeaker(s) and/or a camera(s) (not represented). The PC MMI allows a user to interact with the PC 1. The PC MMI may be used for getting data entered and/or provided by the user. The PC 7, 1 memory(ies) 1.2 may include one or several volatile memories and/or one or several non-volatile memories. The PC memory(ies) 1.2 may store data, such as an ID(s) relating to the PC, that allows identifying uniquely and addressing the PC. The PC ID(s) may include a unique ID, such as a UUID, a Uniform Resource Locator (or URL), a Uniform Resource ID (or URI), and/or other data that allows identifying uniquely and addressing the PC. The PC 7, 1 memory(ies) 1.2 stores the Operating System (OS) and an application which is adapted to send the workload 2 to the CSP to be processed within one of the HW TEE. The owner's application that allows sending this workload 2 may be a web-based portal (e.g., Amazon Web Service, AWS, management console), or even an open-source application (e.g., AWS command line interface).

Although the term workload may be colloquially referred to as a payload, the latter may be merely one component of a workload. For example, the workload may be an instance of a running process associated with an application to be executed on a computing device 3. For confidential computational environments, the "workload" is generally an indication of an ongoing effort of an application (and its corresponding payload(s)) and what is being requested of the application. This may include, for example, computational resources of the computing device 3, such as CPUs, memory, I/O, storage, cache, etc. needed to run the application and to provide isolation of its application code and data. As an example, a workload can be created using resources, such as the application code and data, a containerized image to package the application (e.g., Docker container), and launch polices for the container to control how the workload is deployed and run.

When the computing device 3 runs an application, it generally processes a workload 2. Here, the "load" on the computing device's 3 resources to perform the "work", for example, required by the application, is defined by the workload. In some instances, the workload 2 runs only in the processor 3.1, for example, for untrusted applications. In other instances, the workload 2 may be delegated to run in the HW TEE 4 within the secure enclave 3.1.1, for example, for performing trusted computations. In this example, the workload 2 may be one (e.g., untrusted) portion of the application to be run in the processor 3.1 with a payload (e.g., code and data) that is a trusted component (i.e., code and data for a proprietary algorithm) of the application that is to be executed in secure enclave 3.1.1. containing the HW TEE 4 of the CSP 5.

The PC 1 and/or 7 themselves, or e.g., in combination with server 9, are further configured to send information over the communication network 6 (e.g., Transport Layer Security, TLS) to the CSP end 5. In particular, the broker 1 and the cloud service provider infrastructure 5 may communicate via one or more Application Program Interfaces, APIs, using HTTPS over TLS. This information may include proprietary code or data (i.e., "trusted portion") that serves as workload 2 of the application, to be executed in the HW TEE 4. Although not shown, the communication network 6 may include a telecommunication network to support Internet and telecom services.

In addition, the owner 7 can also establish SSUTSL connectivity directly with the workload 2 running on the HW TEE 4 of the CSP 5. Furthermore, the running workload 2 can access services of the service provider 8. Also, if the workload 2 provides a web-service, different users 110 thereof can also establish HTTPS connectivity with the running workload 2. Details about how to accomplish these wireless, secure connections will be described infra. As shown in figure 1, the computing device 3 includes a processor 3.1, a memory 3.2, and an I/O subsystem 3.3, and a data storage device 3.2.1. Examples of computing devices 3 suitable for confidential computing are those described in US 2021/0117246 A1 in relation with secure enclave supports such as Intel® Software Guard Extensions (SGX) technology.

Thus, the processor 3.1 may be embodied as a single or multi-core processor(s), digital signal processor (DSP), microcontroller, Field Programmable Gate Array (FPGA), or other processor or processing/controlling circuit. The secure enclave 3.1.1, allows the processor 3.1 to establish a trusted execution environment 4, in which executing code (e.g., payload or workload) may be measured, verified, and/or otherwise determined to be authentic. Also, herein, the term "measure" and "measurement" may vary with context. As one example, CPU workloads can be profiled, or "measured", for performance analysis, instrumentation and to identify workload characteristics. Here, the secure enclave may "measure" code function latency, instruction cycle execution, logical operator use, (cache) memory usage, pipeline execution, clocking, timing, and so on. As another example, at the start of the execution, the secure enclave 3.1.1. may "measure" its code and data, which, aside from code performance and data size, may include generating a unique cryptographic hash that serves as a "measure" of attestation identity.

Additionally, code and data included in the secure enclave may be encrypted or otherwise protected from being accessed by code executing outside of the secure enclave. For example, code and data included in the secure enclave may be protected by hardware protection mechanisms of the processor 3.1 while being executed or while being stored in certain protected cache memory of the processor 3.1. The secure enclave 3.1.1 may be embodied as a set of processor instruction extensions that allows the processor 3.1 to establish one or more secure enclaves in the memory 3.2.

The memory 3.2 may be embodied as any type of volatile or non-volatile memory or data storage capable of performing the functions described herein. In operation, the memory 3.2 may store various data and software used during operation of the computing device 3 such as operating systems, applications, programs, libraries, and drivers. As shown, the memory 3.2 may be communicatively coupled to the processor 3.1 via the I/O subsystem 3.3, which may be embodied as circuitry and/or components to facilitate input/output operations with the processor 3.1, the memory 3.2, and other components (not shown) of the computing device 3.

The data storage device 3.2.1 may be embodied as any type of device or devices configured for short-term or long-term storage (i.e., persistent storage) of data such as, for example, memory devices and circuits, memory cards, hard disk drives, solid-state drives, non-volatile flash memory, or other data storage devices. The secure enclave 3.1.1 may have native mechanisms for sealing or persistently storing pre-encrypted data and native standard key exchange to setup an encrypted tunnel for data transport between components of the computing device 3 (for instance, for local attestation purposes).

The Remote Attestation Server (RAS) 107 is a server or other computing device to provide remote attestation services. Similarly, as with PCs 1 and 7 and (or even the server(s) 8, 9) it includes one or several (micro)processors (and/or a (micro)controller(s)) 1.1, as data processing means, comprising and/or being connected to one or several memories 1.2, as data storing means, comprising or being connected to means for interfacing to other servers or systems, for example computing devices 3, 3', 3" internal to the CSP, and computing devices externals to the CSP, such as Party 1, PC 1 or 7 and servers 8 and 9.

In this illustrative embodiment, the components of the computing device 3, or the secure enclave 3.1.1 itself, additionally comprise hardware attestation features to prove their authenticity. The root of trust in the computing device 3 manages the security credentials (keys, certificates) used with this purpose. In some arrangements, these hardware attestation features associated with the root of trust may be used in combination with internal (e.g., within CSP 5) or external (e.g., RAS 107) software attestation features and services to authenticate the workload 2. As mentioned, the external 3rd party remote attestation process described ahead measures code and data of the resulting running workload 2 in the HW TEE 4, for instance when the workload 2 is starting up and when the owner requests it's attestation.

**Figure 1B** and **Figure 1C** illustrate flows for two use-cases for adding a 3rd party, such as the RAS 107 for external attestation services, and the establishment of a secure channel 108 between a party (e.g., client, user, owner, server, service provider, etc.) and the software workload itself when running into a hardware-based trusted execution environment in support of a respective use-case.

Like traditional schemes, the workload 2 will be started by the owner and measured by the HW TEE 4. The workload 2 sends a message to the HW TEE 4 in order to generate an encryption key for the subsequent workload execution and, in addition, HW TEE 4 measures the firmware running on the workload 2 during boot. Just afterwards, the workload 2 will normally send a liveness notification to the party.

Preferably, from that point, the establishment of the secure channel 108 in accordance with inventive aspects herein begins. Two use-cases are provided for using the remote attestation service (RAS) in conjunction with a method 20 for creating a secure channel. In the first use case, the party 1 is responsible for contacting the workload 2, hence creating an inbound secure channel 108.1. While in the second method, the workload 2 itself is responsible for contacting the party 1 (and RAS 107), hence creating an outbound secure channel 108.2. In particular, in the following, it will be described a non-authenticated key- agreement protocol of the type of Elliptic Curve Diffie-Hellman, ECDH, protocol used for generating the session key by the software workload 2 and the party 1.

Figure 1B illustrates a first use case for establishing a secure channel 108 with external 3rd party attestation service where the party 1 is responsible for contacting the workload 2, and hence establishes the inbound secure channel 108.1 to the RAS 107.

Figure 1C illustrates a second use case for establishing a secure channel 108 with external 3rd party attestation service where the workload 2 is responsible for contacting the party 1, and hence establishes the outbound secure channel 108.2 to the RAS 107.

Remote attestation is a method by which a host party (e.g., PC 1 or 7) authenticates its hardware (e.g., Local PC 1: 1.1,1.2,1.3; or, Remote Device 3: 3.1.1, 3.2, 3.3, 4) and software (e.g., Workload 2, 2',2") configuration to a remote host server (e.g., RAS 107). The goal of remote attestation is to enable a relying party, a challenger, to assess the level of trust in the integrity of platform (e.g., software and hardware) under control of the CSP 5.

The remote attestation mechanisms are strictly stronger than local attestation mechanisms because they use an external authority; generally, a certificate authority used as the root of trust instead of a machine-local root of trust.

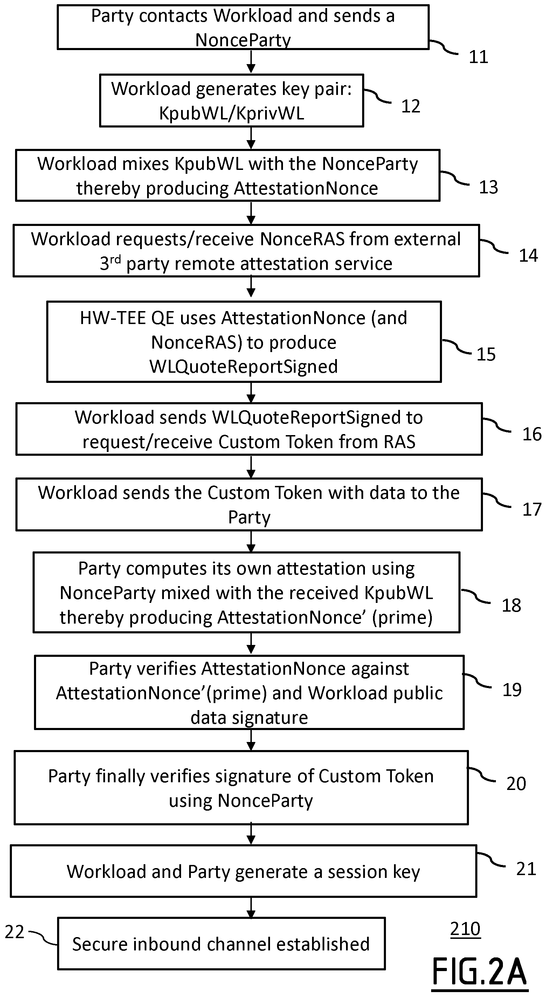

**Figure 2A** depicts a schematic flowchart of a method 210 to establish a secure inbound channel 108.1 between the party 1 and the software workload 2 where the party is responsible for contacting the workload. For this, it will be assumed that the party (e.g., owner) has already sent the workload 2 to the CSP 5 and it is running inside a HW TEE 4 described in figure 1.

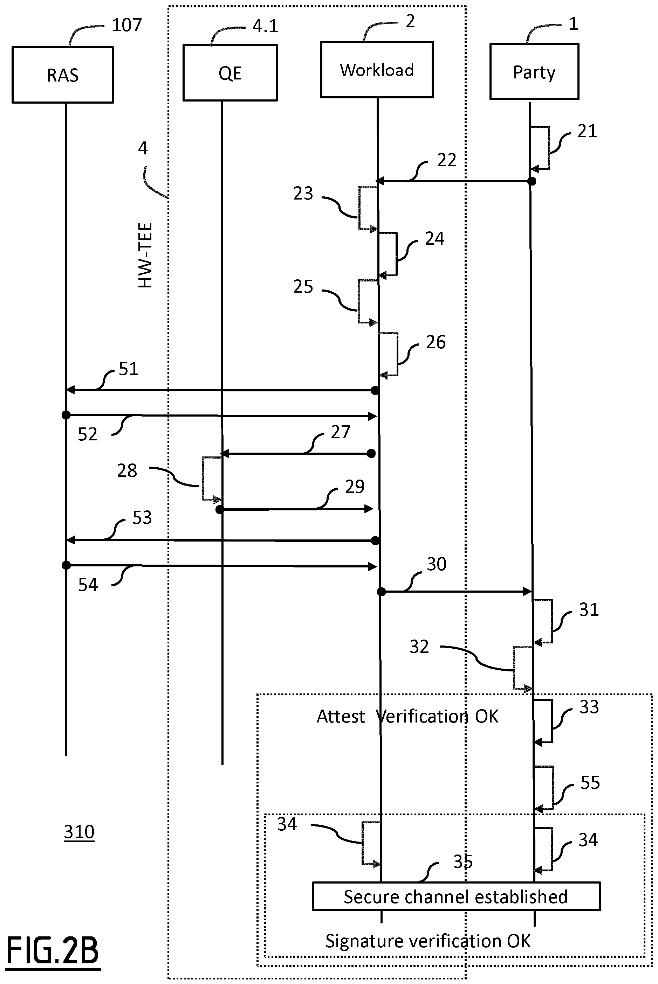

Method **210** comprises the following steps: first, the party 1 generates and then sends **11** at least a nonce (NonceParty; a first nonce) to the software workload 2. Then, the workload 2 generates **12** a workload key pair: public key (KpubWL) and private key (KprivWL). The workload 2 mixes (scrambles) **13** the KpubWL with NonceParty as a "modified" nonce as explained ahead in Figure 2B, thereby producing AttestationNonce to be provided to the HWTEE.

The workload 2 then requests a NonceRAS from the external 3rd party remote attestation services (RAS 107), which it then receives from the RAS 107 as shown in step **14.**

After, the Quoting Enclave (QE) of the HW TEE 4, using at least this AttestationNonce and NonceRAS (i.e., second nonce), generates a quote, and from the quote, produces **15** a WLQuoteReportSigned that it sends to the Workload 2.

Upon the workload 2 receiving the WLQuoteReportSigned from the QE, it sends **16** the WLQuoteReportSigned to the RAS 107 with a request for a Custom Token (e.g., TDX Token). The RAS 107 uses the WLQuoteReportSigned to generate the Custom Token which it sends back to the workload 2.

The workload 2 then sends **17** the Custom Token with other data (e.g., KpubWL, ECDHWLPubDEIt, ECDHWL-PubDEItSigned) to the Party 1.

Once received, the party 1 computes **18** its own attestation by reproducing the same mixing (scrambling) done by the workload 2, but instead using the nonce it originally sent (i.e., NonceParty), thereby producing an AttestationNonce' (prime). Therefore, if the mixing output is the same, it is certain that no attack occurred. The Party 1 then compares the AttestationNonce' (prime) to the AttestationNonce to verify **19** the attestation. It also verifies the signature on previously generated workload public data (e.g., workload public key; ECDHWLPubDEIt).

The Party 1 then finally verifies **20** the signature of the Custom Token using the NonceParty.

Finally, the workload 2 and the party 1, each independent of one another, generate **21** a shared secret used as a session key to thus establish **22** a secure inbound channel 108.1 between them for their communication.

**Figure 2B** depicts a sequence diagram of a method 310 to establish an inbound secure channel 108.1 with external 3rd party attestation services between the party 1 and the software workload 2 when running into a HW TEE at the instance of a cloud service provider where the party is responsible for contacting the workload. In this embodiment, the attestation services for verifying the signature of the workload 2 are provided from outside the confines of the CSP 5, for example, by way of the RAS 107. Here, the attestation is external. This was explained in the background section above.

The method **310** provides a more detailed explanation of the method **210** shown in FIG. 2A. It can be practiced by the components shown; namely, PC 1, 7 or servers 8, 9 for Party 1 (e.g., client, owner), the Workload 2, the Quoting Enclave (QE) 4.1, and additionally the Remote Attestation Service (RAS) 5, though other components not shown may be included. In some arrangements the secure enclave 3.1.1. may be, or include, a Quoting Enclave (QE) 4.1 that produces quotes, or remote attestations, on behalf of enclaves running on the same machine. It produces quotes, or remote attestations, on behalf of enclaves running on the same machine. The quoting enclave is certified by one or more certificate authorities. This enables it to produce quotes that chain back to the trusted authority.

Like traditional schemes, first, the workload 2 will be started by the owner and measured by the HW TEE 4. The workload 2 sends a message to the HW TEE 4 in order to generate an encryption key for the subsequent workload execution and, in addition, HE TEE 4 measures the firmware running on the workload 2 during boot. Just after, the workload 2 will normally send a liveness notification to the party 1 (e.g., owner, client, etc.).

Preferably, from that point, the establishment of the inbound secure channel 108.1 according to this invention starts. In particular, in the following, it will be described a non-authenticated key-agreement protocol of the type of Elliptic Curve Diffie-Hellman, ECDH, protocol used for generating the session key by the software workload 2 and the party 1.

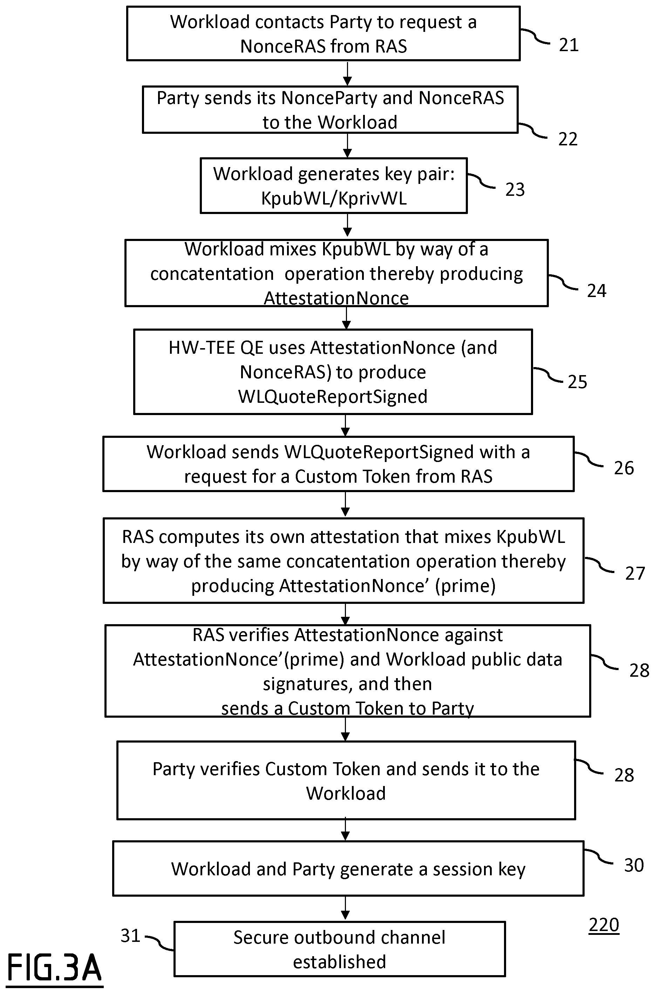

As it can be seen from figure 3A, the party 1 generates **21** party public data (ECDHPartyPubDEIt) and NonceParty and sends **22** them to the workload 2. The party 1 (e.g., client) also stores this NonceParty for verifying the attestation afterwards.

Then, the workload 2 generates **23** ECDSA (public/private) key pair: KpubWL / KprivWL. The workload 2 will also generate **24** workload public data (ECDHWLPuDbEIt) and sign **25** this ECDHWLPubDEIt using KprivWL resulting in ECDHWLPubDEItSigned.

Next, the workload 2 will compute **26** a hash of the KpubWL further scrambling (mixing) this hash output with the NonceParty. In other words, computing:

XOR(HASH(KpubWL), NonceParty) = AttestationNonce

After computing the hash, the workload 2 will send **51** a request to the 3rd party (e.g., remote attestation service (RAS) (107) to generate a NonceRAS, which will be sent back **52** to the workload 2 by the remote attestation service 107.

This AttestationNonce and NonceRAS will be sent or passed **27** by the workload 2 to the HW TEE 4 quoting enclave (QE) 5 for generating **28** a quote. In a traditional workflow, the workload 2 would send to the HW TEE the original nonce (NonceParty in this use case) sent by the user, but according to the invention, the AttestationNonce (and NonceRAS) will be used instead. The skilled person would understand that the workload 2 will also send specific parameters required by the specific HW TEE on a normal attestation workflow. Then, once received, the HW TEE 4 quoting enclave 3.1.1 computes the attestation using at least this AttestationNonce with the specific parameters (Custom Parameters) thus giving rise to an WLQuoteReportSigned. To complete the (direct read) request in **51,** the WLQuoteReportSigned is sent back **29** to the workload 2.

If in the case of a composite enclave, then there is an optional phase to build a common quote to all attesters, for example, to cover a Trusted Domain Extension and a (virtual) Trusted Platform Module (TDX+vTPM), use case, where there are 2 attesters. Briefly, a composite enclave (e.g., FPGA with HW accelerator) is a configurable hardware and software Trusted Computing Base (TCB), allowing enclaves access to multiple computing and IO resources.

Once the WLQuoteReportSigned is received from the quoting enclave, the workload 2 sends a request **53** to the RAS 107 with the WLQuoteReportSigned for an attestation token. The RAS 107 verifies the quoting enclave report and generates a (JWT) token with custom parameters together referred to as a Custom Token, also called a TDXToken in some embodiments, which is sent back **54** to the workload 2. A JSON Web Token (JWT) is an open standard (RFC 7519) that defines a compact and self-contained way for securely transmitting information between parties.

Then, the workload receives it (or intercepts it), and forwards it **30** to the party together with KpubWL, ECDHWLPubDEIt, ECDHWLPubDEItSigned.

The party 1 will receive it and reproduce **31** the scrambling (mixing) done by the workload but using the original NonceParty it sent to the workload 2. Therefore, the party computes:

XOR(HASH(KpubWL), NonceParty) = AttestationNonce' (prime)

and verifies **32** the Custom Token (e.g., TDX Token) using AttestationNonce' (prime). The order of the arguments (KpubWL, NonceParty) of the HASH and the XOR operations may vary in sequence from the default order shown in the equation so long as these operations are consistent with the same argument order for each of the mixing steps. This verification may include comparing the first attestation (Attestation Nonce) with the second attestation (AttestationNonce' (prime)), where a successful comparison means the first and second attestation match (e.g., same numeric value computation). And, if the verification succeeds, the workflow 2 continues. Otherwise, the attestation verification fails, and the inbound secure channel cannot be established. In addition, the party (either broker or owner itself) can be alerted and, optionally, preventive measures may be taken such as aborting the connection with the workload.

In case the attestation can be verified, the party 1 verifies 33 ECDHWLPubDEItSigned using KpubWL. If the verification of the signature succeeds, the workflow continues. Otherwise, the signature verification fails, and the inbound secure channel cannot be established.

The final verification **55** is of the Custom Token, or TDXToken in some embodiments, and is done by the party using the NonceParty. This confirms the authenticity of signature on the token. If the verification of the signature succeeds, the workflow continues. Otherwise, the signature verification fails, and the inbound secure channel cannot be established.

Thereafter, the software workload 2 and the party 1 separately generate **34** a shared secret using the party public data (ECDHPartyPubDEIt) and workload public data ECDHWLPubDEIt, respectively. In this example, the ECDH key-agreement protocol is used. Hence, their use of this shared secret as the session key results in a direct secure channel established 35 between them for secure communications.

Thereafter, the software payload 2 and the party 1 separately generate 34 a shared secret using party public data (ECDHPartyPubDEIt) and workload public data (ECDHWLPubDEIt), respectively. Hence, their use of this shared secret as the session key results in a direct inbound secure channel established **35** between them for secure communications.

Briefly, KprivWL is not limited to sign the ECDH Public Elements, it may be also used to sign any other data exchanged with the party (either the broker, the owner or both). In other embodiments, a Key Derivation Function (KDF) may be used from the shared secret to have a specific signature key.

Advantageously, once the inbound secure channel has been established, the party 1 is able to provision the very same attested workload with some secret(s). Still, through the lifetime of the workload 2, it may be necessary for the party 1 to have subsequent communications with it, for instance to perform secret(s) rotation.

**Figure 3A** depicts a schematic flowchart of a method **220** to establish a secure outbound channel 108.2 between the software workload 2 and the party where the workload 2 is responsible for contacting the party 1. For this, it will be assumed that the party (e.g., owner) has already sent the workload 2 to the CSP 5 and it is running into a HW TEE 4 described in figure 1.

The workload 2 contacts **21** the party 1 with a request to obtain a Nonce (NonceRAS) from RAS 107. Upon receiving the NonceRAS, the Party generates its own nonce (NonceParty) and also generates its own party public data (e.g., a public ECDH key; ECDHPartyPubDEIt). The party 1 then sends **22** its NonceParty, the NonceRAS it received from RAS 107, and ECDSPartyPubDEIt to the workload 2.

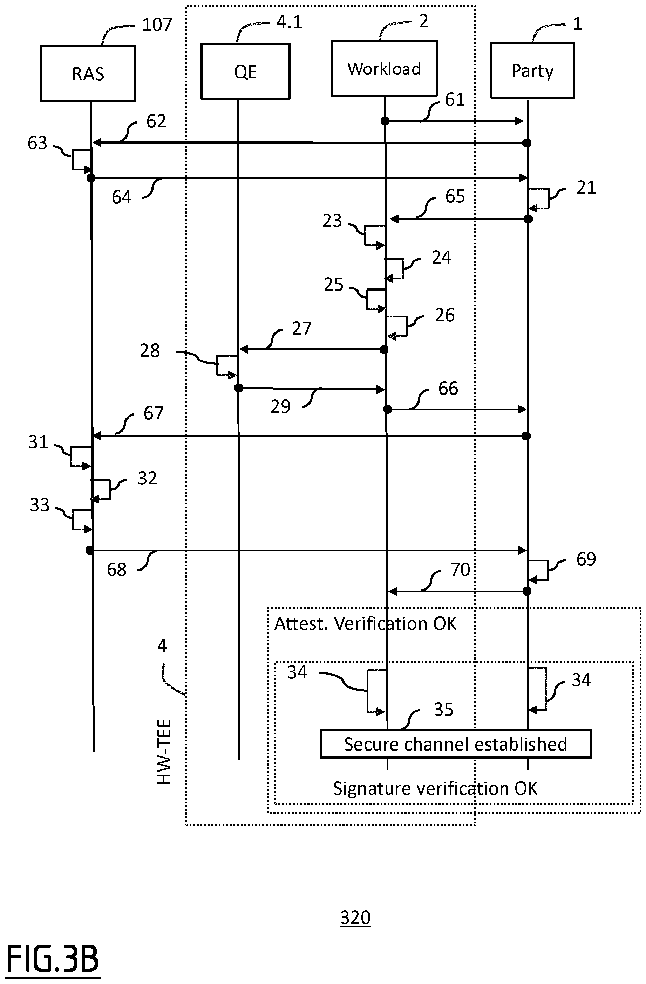

Then, the workload 2 generates **23** a workload key pair: public key (KpubWL) and private key (KprivWL). It also generates its own public ECDH key; ECDHWLPubDEIt). The workload 2 mixes (scrambles) **24** the KpubWL with NonceParty as a "modified" nonce by way of a concentration operation as explained with Figure 3B, thereby producing AttestationNonce to be provided to the HW TEE. The workload 2 provides the HW-TEE 4 with the AttestationNonce for computing **25** the attestation instead of the original NonceParty generated by the party (e.g., a broker, client, user, or owner).

After, the Quoting Enclave of the HW TEE 4, using at least this AttestationNonce. and NonceRAS, generates a quote, and then from the quote, produces **25** WLQuoteReportSigned which it sends to the Workload 2.

Upon the workload 2 receiving the WLQuoteReportSigned, it sends **26** a request for a Custom Token (e.g., TDX Token) to the Party, which the Party forwards to the RAS. This request includes data: WLQuoteReportSigned, KpubWL, ECDHWLPubDElt, ECDHWLPubDEltSigned, and (KpubWL, NonceParty).

The RAS computes **27** its own attestation, which mixes KpubWL by way of the same previous concentration operation on the data, thereby producing AttestationNonce' (prime). It then verifies **28** AttestationNonce against AttestationNonce'(prime), verifies workload public data signatures (e.g., ECDHWLPubDEltSigned), and then sends a Custom Token to Party 1.

The Party 1 verifies **29** the Custom Token it received from the RAS. Finally, the workload 2 and the party 1, each independent of one another, generate **30** a shared secret used as a session key to thus establish **31** a secure outbound channel 108.2 between them for their communication.

**Figure 3B** shows a sequence diagram of a method **320** for an embodiment of Figure 3A to establish an outbound secure channel 108.2 with external 3rd party attestation services between the party 1 and the software workload 2 when running into a HW TEE at the instance of a cloud service provider where the workload 2 is responsible for contacting the party 1. In this embodiment, the attestation services for verifying the signature of the workload 2 are also provided from outside the confines of the CSP 5, for example, by way of the RAS 107. Here, the attestation is external. This was explained in the background section above.

The method **320** can be practiced by the components shown; namely, PC 1, 7 or servers 8,9 for Party 1 (e.g., Client, Owner), the Workload 2, the Quoting Enclave (QE) 4.1, and additionally the Remote Attestation Service (RAS) 5, though other components not shown may be included. In some arrangements the secure enclave 3.1.1. may be, or include, a Quoting Enclave (QE) 4.1 that produces quotes, or remote attestations, on behalf of enclaves running on the same machine. It produces quotes, or remote attestations, on behalf of enclaves running on the same machine. The quoting enclave is certified by one or more certificate authorities. This enables it to produce quotes that chain back to the trusted authority.

Like traditional schemes, first, the workload 2 will be started by the owner and measured by the HW TEE 4. The workload 2 sends a message to the HW TEE 4 in order to generate an encryption key for the subsequent workload execution and, in addition, HE TEE 4 measures the firmware running on the workload 2 during boot. Just after, the workload 2 will normally send a liveness notification to the owner or client.

Preferably, from that point, the establishment of the outbound secure channel 108.2 according to this invention starts. In particular, in the following, it will be described a non-authenticated key-agreement protocol of the type of Elliptic Curve Diffie-Hellman, ECDH, protocol used for generating the session key by the software workload 2 and the party 1.

The workload 2 sends a request **61** to the party 1 to get the nonces. The party forwards this request **62** to the RAS 107 where the RAS will generate NonceRAS **63** and send back **64** its nonce to the party 1. The party 1 generates **21** party public data (ECDHPartyPubDElt) and NonceParty, and sends **65** them to the workload 2, along with the NonceRAS it received from the RAS. The party also stores this NonceParty for verifying the attestation afterwards, and the RAS stores its NonceRAS for verifying the attestation afterwards.

Then, the workload generates **23** a ECDSA (public/private) key pair: KpubWL / KprivWL. The workload will also generate **24** workload public data (ECDHWLPubDElt) and sign **25** this ECDHPartyPubElt using KprivWL resulting in ECDHWLPubDEltSigned. Next, the workload 2 will compute **26** a hash called AttestationNonce with the formula given below. The computation of this hash first requires a concatenation operation of the KpubWL hash with the NonceParty. The output of that must be concatenated again with NonceRAS. The final hash operation hence must be performed on the final concatenation.

HASH(concat(NonceRAS, concat(KpubWL, NonceParty))) = AttestationNonce

Here, KpubWL is first concatenation of the workload public key with NonceParty, and that result is then concatenated with NonceRAS. The NonceParty should be kept a secret from RAS, to eliminate any potential replay attacks (using the NonceParty) from the RAS on the Party. This is why the order of concatenation should be kept as shown in the equation above, as the layer of "concat(KpubWL, NonceParty)" will not be decoded by the RAS. So, the above equation is only compatible with the given architecture, to protect and preserve this particular design's security and privacy posture. A change of the equation, will require a corresponding change in the design, and corresponding change of the protocol, which will have to be adjusted to that equation, or visa versa, to maintain the privacy and security posture of the whole design. The AttestationNonce will be sent **27** by the workload 2 to the HW TEE's quoting enclave (QE) for generating **28** a quote. In a traditional workflow, the workload 2 would send to the HW TEE 4 the original NonceParty sent by the user but, according to the invention, the AttestationNonce (and NonceRAS) will be used instead. The skilled person would understand that the workload 2 will also send specific parameters required by the specific HW TEE on a normal attestation workflow. Then, once received, the HW TEE's quoting enclave (QE) computes the attestation using at least this AttestationNonce thus giving rise to WLQuoteReportSigned. To complete the (direct read) request in **27,** the WLQuoteReportSigned is sent back **29** to the workload.

If in the case of a composite enclave, then there is an optional phase to build a common quote to all attesters, for example, to cover a Trusted Domain Extension and a (virtual) Trusted Platform Module (TDX+vTPM), use case, where there are 2 attesters. Briefly, a composite enclave (e.g., FPGA with HW accelerator) is a configurable hardware and software Trusted Computing Base (TCB), allowing enclaves access to multiple computing and IO resources.

Once the WLQuoteReportSigned is received from the quoting enclave, the workload 2 sends a request **66** to the Party (e.g., client) with the WLQuoteReportSigned and other data KpubWL, ECDHWLPubDEIt, ECDHWLPubDEItSigned and concat(KpubWL, NonceParty) for an attestation token. The party will forward **67** this request to the RAS 107.

The RAS 107 will reproduce the AttestationNonce by generating **31** AttestationNonce' using the original NonceRAS (with the concatenated data KpubWL and NonceParty) it sent to the workload (via the party). Therefore, the party 1 computes:

HASH(concat(NonceRAS, concat(KpubWL, NonceParty))) = AttestationNonce' (prime)

The RAS will verify **32,** by comparing, the AttestationNonce with AttestationNonce' (prime). Once AttestationNonce is verified, the signature of the ECDHWLPubDEItSigned is also verified next **33.** If the verifications succeed, the workflow continues. Otherwise, the attestation verification fails, and the secure channel cannot be established. In addition, the RAS 107 can be alerted and, optionally, preventive measures may be taken such as aborting the connection with the party.

Responsive to the successful verifications, the RAS 107 sends **68** a Custom Token (e.g., JWT TDXToken) to the party 1 (e.g., client), where the party verifies **69** the Custom Token (e.g., JWT token). The verification includes checking the TDXToken and checking the NonceParty in the AttestationNonce with the KpubWL. If the verification of the signature succeeds, the workflow continues. Otherwise, the signature verification fails, and the outbound secure channel cannot be established. After successful verification, the party 1 will then send **70** the Custom Token (e.g., JWT TDXToken) to the workload.

Thereafter, the software workload 2 and the party 1 separately generate **34** a shared secret using party public data (ECDHPartyPubDEIt) and workload public data (ECDHWLPubDEIt), respectively. Hence, their use of this shared secret as the session key results in a direct outbound secure channel established **35** between them for secure communications.

Advantageously, once the outbound secure channel has been established, the party is able to provision the very same attested workload 2 with some secret(s). Still, through the lifetime of the Workload 2, it may be necessary for the party 1 to have subsequent communications with it, for instance to perform secret(s) rotation.

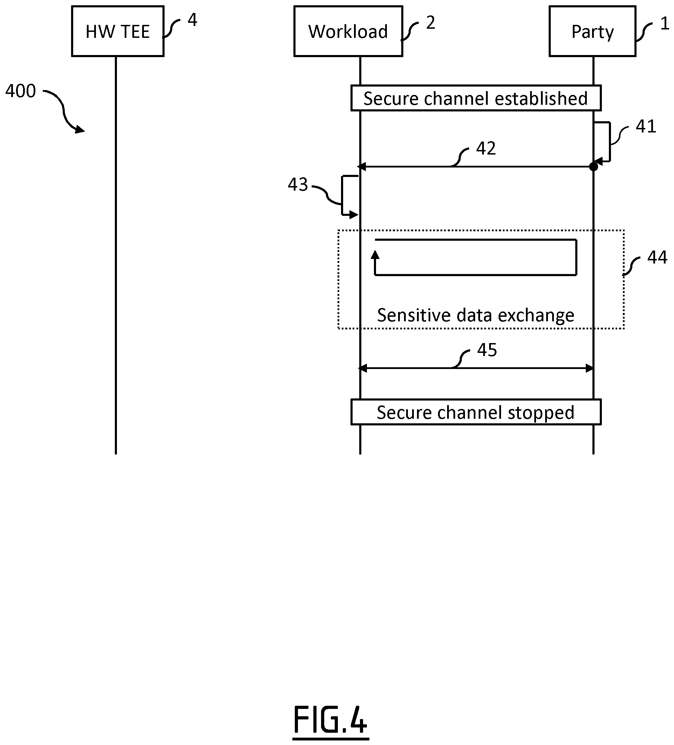

Therefore, in view of the method **310** and **320** shown in figure **3A** and **3B,** respectively, **figure 4** depicts a sequence diagram of a methods **400** for providing authentication means for the party. Thanks to this, both parties are authenticated and therefore the secure channel (whether the inbound secure channel 108.1 or the outbound secure channel 108.2) may be re-opened on demand with the very same attested workload 2.

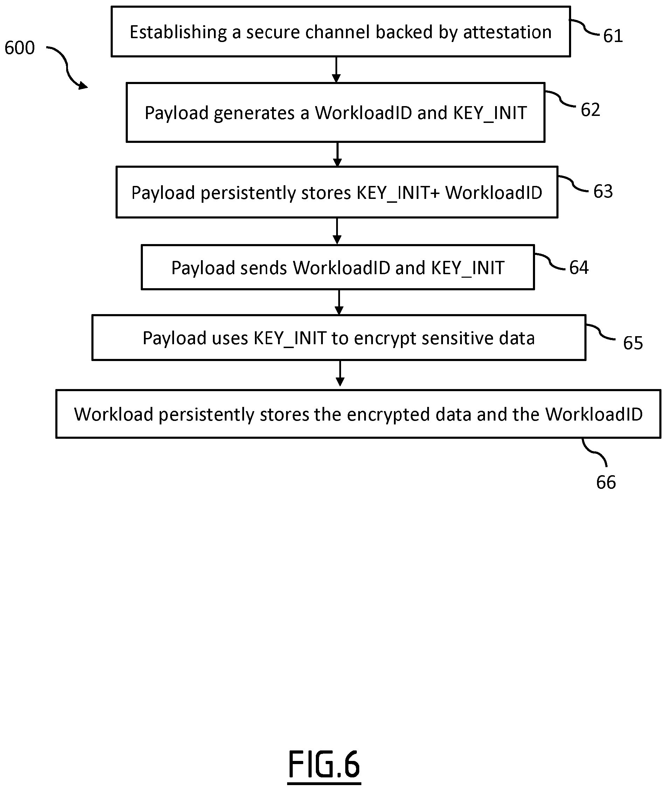

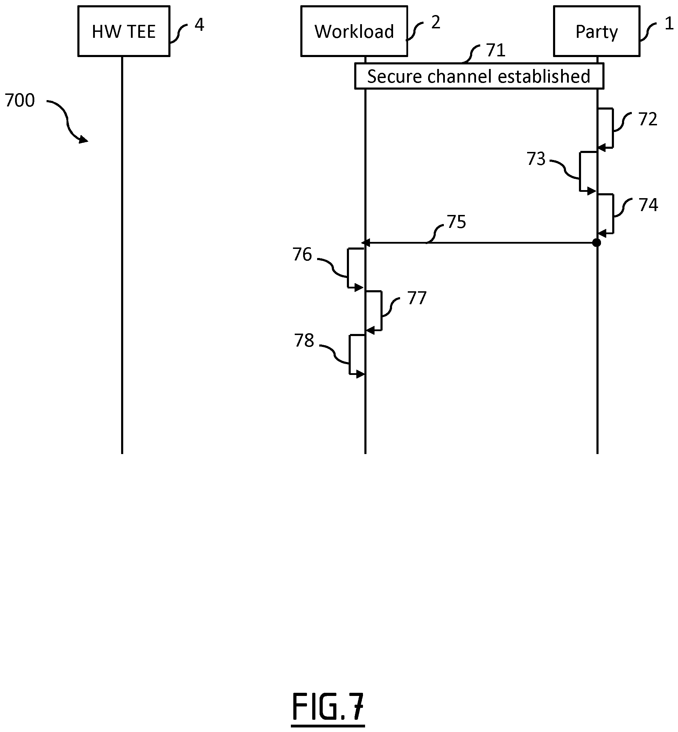

That is, once the secure channel 108 (whether inbound 108.1 or outbound 108.2) has been established between the party 1 and the software workload 2 running into the HW TEE 4 for instance, using the method 200, 310 or 320 according to figures 2 or 3A-3B, the party 1 generates 41 a party ECDSA key pair: public key (KpubParty) and private key (KprivParty), and then sends the KpubParty to the workload 2. The software workload 2 receives KpubParty and stores it 43 in a memory under the protection of the HW TEE 4. This persistent storage may be used either using the native sealing capabilities of the HW TEE or, alternatively, using any of the methods according to any of figures 6 or 7.

Then, both the party 1 and the workload 2 can exchange 44 any information relevant to the application in a secure manner. After this provisioning, since maintaining the secure channel through the whole lifetime of the workload 2 would be too costly in term of network resources, any of the ends may require closing the secure channel 45 and the secure communication will stop. Therefore, an authenticated secure channel backed up by attestation may be opened and closed as needed.

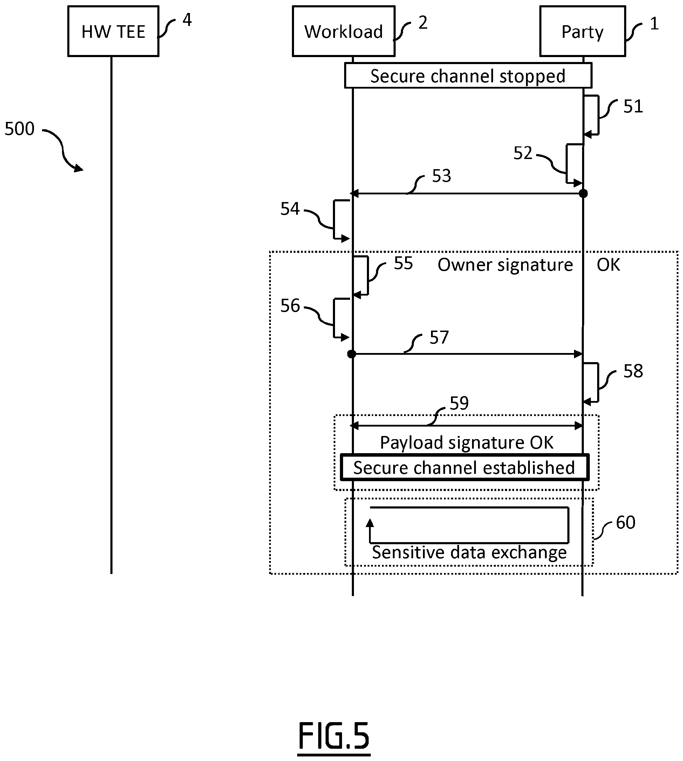

**Figure 5** depicts a schematic diagram of an embodiment of a method 500 to re-establish a secure and authenticated channel 108 (whether inbound 108.1 or outbound 108.2) between the party 1 and the software workload 2. It will be assumed that a secure channel according to the method 200, 310 or 320 of the figures 2 or 3A-3B was already established and, afterwards, stopped.

First, the party 1 and the workload 2 perform a non-authenticated key-agreement protocol of the type of ECDH protocol for generating a session key. This session key may be different or similar to the session key already used for the establishment of the last secure channel. Thus, the party generates 51 party public data (ECDHPartyPubDEIt) and signs it 52 using KprivParty thus resulting in ECDHPartyPubDEItSigned. Then, the party sends 53 these ECDHPartyPubDEIt and ECDHPartyPubDEItSigned to the workload 2. The software workload 2 retrieves the previously stored (e.g., in a HW TEE memory such as RAM) KpubParty and verifies 54 ECDHPartyPubDEItSigned using KpubParty. If the party signature is verified at workload's end, the workflow will continue. Otherwise, this verification will fail and the secure channel cannot be established.

If verified, the workload also generates 55 workload public data (ECDHWLPubDEIt) and retrieves KprivWL for signing 56 this ECDHWLPubDEIt giving rise to ECDHWLPubDEItSigned. Then, the payload sends 57 ECDHWLPubDEIt and ECDHWLPubDEItSigned to the party which verifies 58, at its end, the ECDHWLPubDEItSigned using the KpubWL. If verified, both the payload 2 and the party 1 will generate or compute 59 a (new) shared secret using ECDHPartyPubDEIt and ECDHWLPubDEIt, respectively. Finally, the secure channel 108 is re-established 60 between the party and the software payload running into the HW TEE allowing the party 1 and the workload 2 exchanging any sensitive information in a secure manner.

**Figure 6** depicts a schematic flowchart of a method 600 to persistently store sensitive data by the payload 2. It is assumed that a secure channel 108 (whether inbound 108.1 or outbound 108.2) has been established 61 between the party 1 and the workload 2 itself when running into a HW TEE 4 at the instance of a cloud service provider. Preferably, this secure channel is backed by the computation, by the HW TEE, of an attestation.

First, the party generates 62 a workload identifier (WorkloadID) using information shared from the workload 2 during the establishment of the secure channel. For instance, WorkloadID can be derived from the attestation information such as information relative to the HW TEE, the version of the workload, and/or the instantiation of the workload. Then, the party 1 also generates 62 a key initiator (KEY_INIT) and persistently stores 63 (i.e., at the party side) the key initiator associated to the WorkloadID. In a basic configuration, this KEY_INIT may be simply a symmetric key. Then, the party sends 64 the WorkloadID and key initiator to the workload. And the workload uses 65 the key initiator to encrypt data. By doing so, the workload 2 will be able to persistently store 66 in the HW TEE 4 memory (e.g., RAM) the encrypted data and the WorkloadID without relying on the privacy mechanisms of the HWTEE.

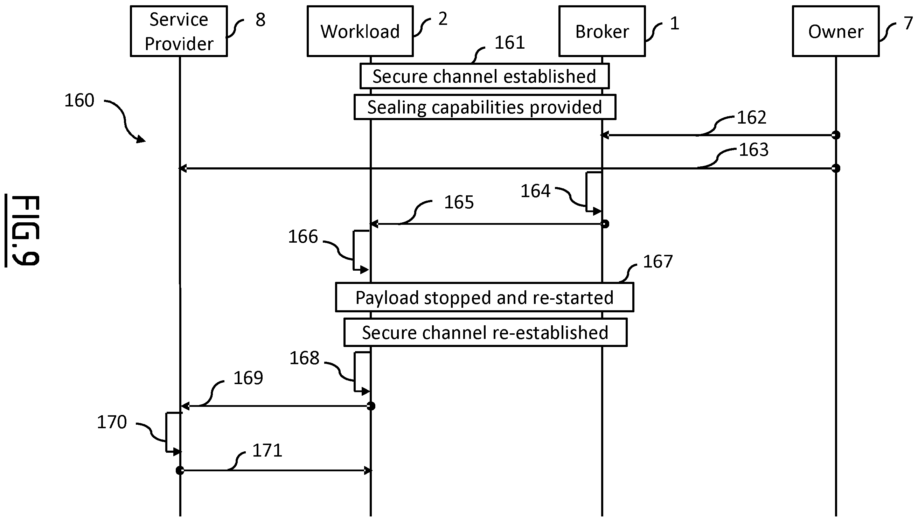

The persistently stored sensitive data may be, for instance, KpubParty and KprivWL. As it will be seen, the workload will also store WLIDCiphered (figure 7), and JWT (figure 9). Therefore, when the workload needs to retrieve this persistently stored data the following steps are taken: the workload retrieves the stored WorkloadID and sends it to the party; the party retrieves the key initiator associated to the received payload identifier and sends this key initiator to the workload; and the workload uses said key initiator to decrypt the persistently stored data. After that, the workload will delete this key initiator.

**Figure 7** depicts a preferred embodiment of a method 700 to persistently store sensitive data by the payload 2 without relying on the sealing capabilities of the HW TEE 4. As mentioned, a secure channel 108 (whether inbound 108.1 or outbound 108.2) has been established 71 between the party 1 and the workload 2, for instance, backed by the computation, by the HW TEE 4, of an attestation. The party generates 72 WorkloadID using information from the attestation. Then, the party encrypts the WorkloadID using a first encryption key (WLIDEncKey) resulting in WLIDCiphered. Then, the party also generates 73 KEY_INIT and persistently stores 74 (i.e., at the party side) the KEY_INIT associated to the WorkloadID.

Then, the party sends 75 these WLIDCiphered and KEY_INIT to the payload. The workload passes 76 the KEY_INIT through a key derivation function, KDF, to generate a symmetric key (DataEncKey) for encrypting data, and (in addition) to generate a DataIntKey and Message Authentication Code (MAC) that allows the payload to subsequently check the integrity of the persistently stored data. Finally, first the workload stores 77 the WLIDCiphered and further encrypts and MAC 78 the sensitive data.

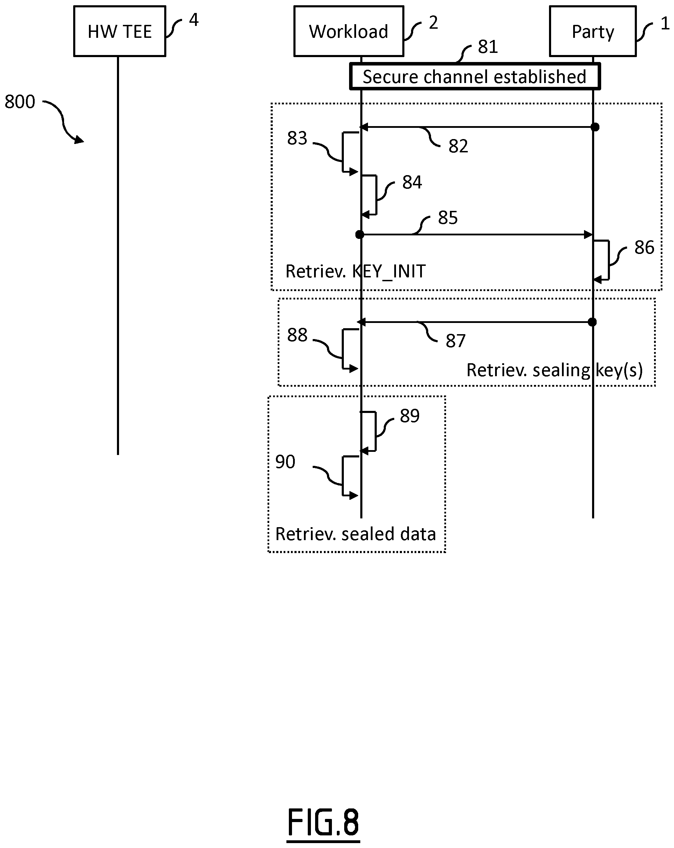

**Figure 8** depicts a preferred embodiment of a method 800 to retrieve persistently stored sensitive data by the workload 2 as, for instance, any of the methods 600. 700 according to figures 6 or 7. As mentioned, a secure channel has been established 81 between the party 1 and the workload 2, for instance, backed by the computation, by the HW TEE, of an attestation. Either at the instance of the workload or as part of a workflow, the party 1 sends 82 WLIDEncKey to the workload 2. Then, firstly, the workload retrieves 83 the WLIDCiphered and further decrypts 84 it using WLIDEncKey (= WorkloadID). The workload will then send 85 back to the party the WorkloadID in clear.

As an alternative implementation (not shown), the workload 2 may retrieve WLIDCiphered and send it to the party which will decrypt it using WLIDEncKey thus also resulting on WorkloadID in clear. Once the party has the WorkloadID in clear, it looks for any known WorkloadID and, if found, retrieves 86 the associated KEY_INIT. Otherwise, if no WorkloadID can be found, an error message may appear, and the communications may end. If KEY_INIT retrieval succeeds, the party sends 87 KEY_INIT to the workload which will pass it through KDF to generate 88 DataEncKey for decrypting the sealed data, and to generate 98 DataIntKey to check the integrity of the persistently stored data. Therefore, the workload retrieves 89 the sealed data and, accordingly, use DataEncKey and DataIntKey to decrypt and check 90 the integrity of this sealed data.

In the following usage example, the party 1 will be embodied as a 3rd party of trust for the owner, e.g., a broker. The following example will rely on the authentication and sealing properties as described in connection with previous figures 1 to 8. In particular, one scenario is described hereinafter for managing traditional credentials which are injected in the workload 2 by the broker 1 so the workload is enabled to use traditional native cloud environment. The skilled person shall understand that these scenarios, even described separately for illustrative purposes, may coexist for providing the workload with more than one functionality.

**Figure 9** depicts a schematic diagram of an embodiment of a method 900 to prove to a service provider that the workload has been attested for its further use. In particular, this method 160 allows the workload accessing services to address e.g., APIs. Again, a secure channel 108 (whether inbound 108.1 or outbound 108.2) has been established between payload 2 and party 1 and, in addition, the workload has been provided with data sealing capabilities 161 according to figures 1 to 8.

First, the owner defines 162 JSON Web Token, JWT-like token, policies to the broker, and configures 163 the service provider to accept the JWT from the party 1, whom may be a broker. This may occur offline, i.e., without initiating the payload. Thus, the owner configures its service access to the service provide to establish also trust with the party-generated JWT. The party 1 then generates and signs 164 (e.g., using KprivBroker) a token according to policies setup by the owner. Then, once the workload is initiated, the party sends 165 the signed token to the payload which, in turn, stores 166 it. Again, it is described that, optionally, the workload has been stopped and re-started so that the secure channel had to be re-established 167 again. Next, the workload configures 168 the application with JWT.

In use, the workload tries to connect 169 the service provider using JWT. Then, the service provider checks 170 the JWT (this process is out of the scope of this invention and hence it is not explained here) and, if verified, the service provider provides 171 the service to the workload. The service provider is able to verify the signature of the workload because the party has already signed the JWT with a standard format (e.g., the certificate of the broker can be retrieved for verifying the signature to accept or not the JWT). The skilled person would recognize that these defined functionalities may be implemented as a library. Therefore, the developer can decide to use several workloads: one for the database, one for the webserver, one for the back-end, etc.

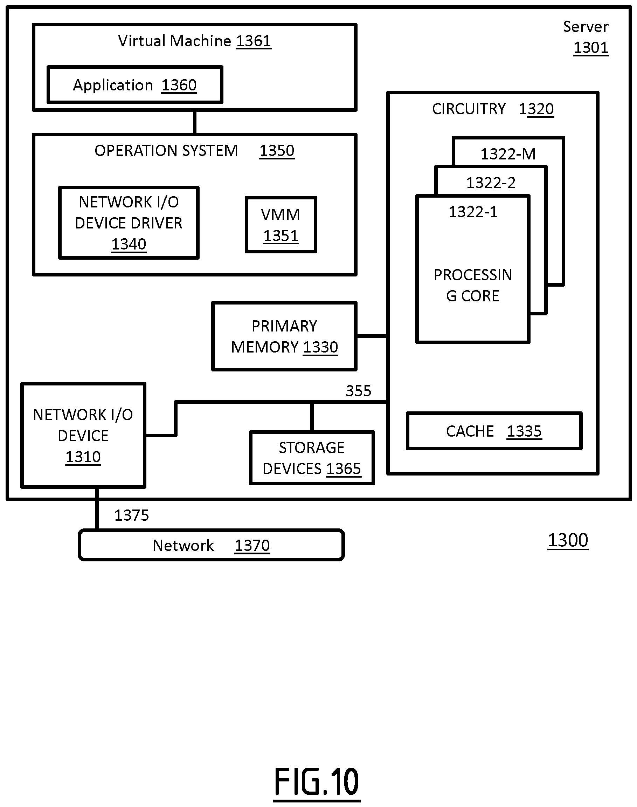

**Figure 10** shows an exemplary server **1301** (e.g., PC 1, 7, Server 8, 9) for implementing any of the methods (e.g., **210, 220, 310, 320,** etc.) that includes circuitry **1320,** primary memory **1330,** operating system (OS) **1350,** Network (NW) I/O device driver **1340,** virtual machine manager (VMM) (also known as a hypervisor) **1351,** at least one application **1360** running in a virtual machine (VM) **1361,** and one or more storage devices **1365.** In one embodiment, OS **1350** is Linux™. In another embodiment, OS **1350** is Windows® Server. Other OSs may also be used. In an embodiment, application **1360** comprises one or more of a cloud license manager service having one or more smart license automatic detach policies. Network I/O device driver **1340** operates to initialize and manage I/O requests performed by network I/O device **1310.** In an embodiment, packets and/or packet metadata transmitted to network I/O device **1310** and/or received from network I/O device 310 are stored in one or more of primary memory **1330** and/or storage devices **1365.**

In some embodiments, the party **1,** owner, client, RAS **107** or other system components in **Figure 1A** may also include their own respective server **1301,** and/or which may comprise one or more processors, with processing cores, and memory coupled to the one or more processors, wherein the memory includes one or more partitions and computer instructions which when executed by the one or more processors causes the one or more processors to perform said steps and operations described herein associated with the methods.

In some examples, as shown in **FIG. 10,** circuitry **1320** may communicatively couple to network I/O device **1310** via communications link **1355.** In one embodiment, communications link **1355** is a peripheral component interface express (PCIe) bus conforming to version 3.0 or other versions of the PCIe standard published by the PCI Special Interest Group (PCI-SIG). In some examples, operating system **1350,** network I/O device driver **1340,** VM **1361,** and application 1360 are implemented, at least in part, via cooperation between one or more memory devices included in primary memory **1330** (e.g., volatile or non-volatile memory devices), storage devices **1365,** and elements of circuitry **1320** such as processors with processing cores **1322**-1 to **1322**-m, where "m" is any positive whole integer greater than 2. In an embodiment, OS **1350,** VMM **1351,** network I/O device driver **1340,** VM **1361** and application **1360** are executed by one or more processing cores **1322**-1 to **1322**-m.

In some examples, service provider **301,** includes but is not limited to a server, a server array or server farm, a web server, a network server, an Internet server, a work station, a mini-computer, a main frame computer, a supercomputer, a network appliance, a web appliance, a distributed computing system, multiprocessor systems, processor-based systems, a laptop computer, a tablet computer, a smartphone, a system-on-a-chip (SoC), or a combination thereof. In one example, service provider **1301** is a disaggregated server. A disaggregated server is a server that breaks up components and resources into subsystems (e.g., network sleds). Disaggregated servers can be adapted to changing storage or compute loads as needed without replacing or disrupting an entire server for an extended period of time. A server could, for example, be broken into modular compute, I/O, power and storage modules that can be shared among other nearby servers.

Circuitry 1320 having processing cores 1322-1 to 1322-m may include various commercially available processors, including without limitation Intel® Atom®, Celeron®, Core (2) Duo®, Core i: 3, 5, 7 and 9, Itanium®, Pentium®, Xeon® or Xeon Phi® processors, ARM processors, and similar processors. Circuitry 1320 may include at least one cache **1335** to store data.

According to some examples, primary memory **1330** may be composed of one or more memory devices or dies which may include various types of volatile and/or non-volatile memory. Volatile types of memory may include, but are not limited to, dynamic random-access memory (DRAM), static random-access memory (SRAM), thyristor RAM (TRAM) or zero-capacitor RAM (ZRAIVI). Non-volatile types of memory may include byte or block addressable types of non-volatile memory having a 3-dimensional (3-D) cross-point memory structure that includes chalcogenide phase change material (e.g., chalcogenide glass) hereinafter referred to as "3-D cross-point memory". Non-volatile types of memory may also include other types of byte or block addressable non-volatile memory such as, but not limited to, multi-threshold level NAND flash memory, NOR flash memory, single or multilevel phase change memory (PCM), resistive memory, nanowire memory, ferroelectric transistor random access memory (FeTRAM), magneto-resistive random-access memory (MRAM) that incorporates memristor technology, spin transfer torque MRAM (STT-MRAM), or a combination of any of the above. In another embodiment, primary memory **330** may include one or more hard disk drives within and/or accessible by service provider **301.**

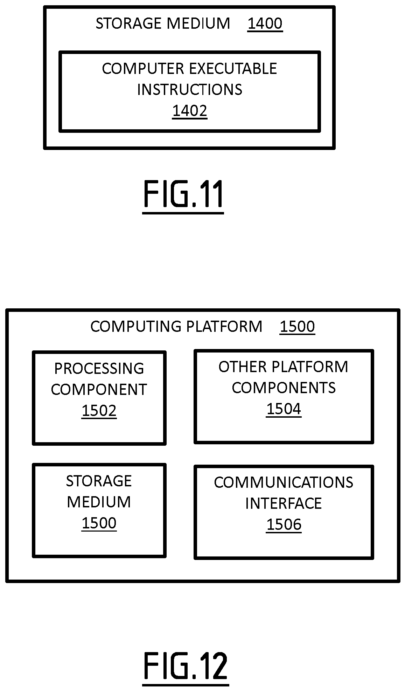

**FIG. 11** illustrates an example of a storage medium **1400,** for instance, used within, or by, previously mentioned system components or devices. Storage medium **1400** may comprise an article of manufacture. In some examples, storage medium **1400** may include any non-transitory computer readable medium or machine readable medium, such as an optical, magnetic or semiconductor storage. Storage medium **1400** may store various types of computer executable instructions, such as instructions to implement method steps and logic flows described in the above figures. Examples of a computer readable or machine-readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

In accordance with various embodiments of the present disclosure, the methods described herein are intended for operation as software programs running on a computer processor or integrated on-chip code within static memory. Furthermore, software implementations can include, but not limited to, distributed processing or component/object distributed processing, parallel processing, or virtual machine processing can also be constructed to implement the methods described herein.

**FIG. 12** illustrates an example computing platform **1500.** Each of the devices described above (e.g., Client 1, PC 7, Server 8, 9) can include their own computing platform **1500** for handling and processing communication exchanges described and shown in the sequence diagrams of **FIGS 1A, 2A, 2B, 3A, 3B, 4-9.** In some examples, computing platform **1500** may include a processing component **1502,** other platform components **1504** and/or a communications interface **1506.** According to some examples, processing component **1502** may execute processing operations or logic for instructions stored on storage medium **1400.** Processing component **1502** may include various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth.

Examples of software elements may include software components, programs, applications, computer programs, application programs, device drivers, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

## Claims

1. A Computer-implemented method (210, 220) to establish an inbound secure channel between a party and a workload when running into a hardware-based trusted execution environment (HW TEE) at an instance of a cloud service provider, where the party is responsible for contacting the workload, the method comprising the following steps:

   generating (21), by the party, party public data and a first nonce (NonceParty);
   sending (22), by the party, the party public data and the first nonce (NonceParty) to the workload;
   generating (23,24), by the workload, workload public data and a workload key pair comprising a workload public key and a workload private key;
   signing (25), by the workload, the workload public data with the workload private key thereby producing signed workload public data;
   mixing (26), by the workload, the workload public key with the first nonce thereby producing a first attestation (AttestationNonce);

requesting (51), by the workload, and then receiving (52) a second nonce (NonceRAS) from an external third-party remote attestation service (RAS);

computing (28), by a Quoting Enclave of the HW TEE, a quote using at least this second nonce and the Attestation Nonce, and then from the quote, producing a signed workload report (WLQuoteReportSigned) and sending it to the workload;

sending (53), by the workload, at least the signed workload report and a request to receive a Custom Token to the RAS for attestation purposes;

verifying, by the RAS, the signed workload report before generating the Custom Token that is sent (54) to the workload;

sending (30), by the workload, the workload public key, and signed workload data to the party and the Custom Token received from the RAS;

mixing (31), by the party, the workload public key with the first nonce (NonceParty) thereby producing a second attestation (AttestationNonce prime);

comparing (32), by the party, the second attestation to the first attestation;

verifying (33) the signed workload data using the workload public key;

verifying (55), by the party, a signature of the Custom Token using the first nonce (NonceParty); and

if the comparing is successful, and if the signatures on both the signed workload data and Custom Token are verified,

> generating (34), by the workload and the party, a session key between them; and
> establishing (35) an inbound secure channel between the party and the workload running into the HW TEE.

2. The method according to claim 1, wherein said mixing by the workload and said mixing by the party to produce the first attestation and second attestation, respectively, each perform their own exclusive "or" operation of the first nonce (Nonce Party) with a hash of said public key, as below:

$$XOR(hash(KpubWL), NonceParty) = AttestationNonce$$

3. The method according to claim 1, wherein the Custom Token is a JSON Web Token (JWT), or a JWT-like token, provided by the external third-party remote attestation service for attestation, and the method comprising:

> configuring, by the party, a second party to accept the JWT, or JWT-like token;
> generating, by the party, a token according to policies from the party;
> signing, by the party, the token;
> sending, by the party, the signed token to the workload; and
> storing persistently, by the workload, the JWT, or JWT-like token.

4. The method according to any one of the preceding claims, further comprising the following steps for generating the session key by the workload and the party using a non-authenticated key-agreement protocol such as one based on a Elliptic Curve Diffie-Hellman, ECDH, protocol:

> generating and sending, by the party, party public data to the workload;
> generating, by the workload, public data and signing this public data using the private key;
> sending, by the workload, the public data and the signed public data to the party;
> verifying, by the party, the signed public data using the received public key; and
> computing, by the workload and the party, a shared secret using party public data and public data, respectively.

5. The method according to any one of the preceding claims, wherein, once the inbound secure channel has been established between the party and the workload running into the HW TEE, the party further provisions the workload with secrets, thereby permitting a later re-opening of the inbound secure channel using the secrets stored by the workload for subsequent communication.

6. The method according to any one of the preceding claims, wherein the workload provides a web-service, the method further comprising:

> signing, by the party, a certificate, such as a X.509 certificate private key, and

sending, by the party, the signed certificate to the workload which will use the certificate to establish connectivity, such as HTTPS connectivity, to the web-service.

7. A Computer-implemented method (220, 320) to establish an outbound secure channel between a party and a workload when running into a hardware-based trusted execution environment (HW TEE) at an instance of a cloud service provider, where the workload is responsible for contacting the party, the method comprising the following steps:

contacting (61), by the workload, the party to request a first nonce (NonceRAS) from an external third party remote attestation service (RAS);
generating (21), by the party, a second nonce (NonceParty) and party public data;
sending (65), by the party, the second nonce (NonceParty), the party public data and the first nonce (NonceRAS) to the workload;
generating (23,24), by the workload, workload public data and a workload key pair comprising a workload public key and a workload private key;
signing (25), by the workload, the workload public data with the workload private key thereby producing signed workload public data;
mixing (26), by the workload, the workload public key with the first nonce (NonceRAS) and the second nonce (NonceParty) by way of a concatenation operation thereby producing a first attestation (AttestationNonce);
computing (28), by a Quoting Enclave of the HW TEE, a quote for the Attestation Nonce, and then from the quote, producing a signed workload report (WLQuoteReportSigned) and sending it to the workload;
sending (66), by the workload, at least the signed workload report with other data and a request to receive a Custom Token to the party,
forwarding (67), by the party, at least the signed workload report with the other data and the request to receive the Custom Token from the RAS for attestation purposes;
mixing (31), by the RAS, the workload public key with the first nonce (NonceRAS) and the second nonce (NonceParty) by way of the concatenation operation thereby producing a second attestation (AttestationNonce prime);
comparing (32), by the RAS, the second attestation to the first attestation;
verifying (33), by the RAS, the signed workload data using the workload public key from the other data;
sending (68), by the RAS, the Custom Token to the party;
verifying (69), by the party, a signature of the Custom Token using the first nonce (NonceParty); and
if the comparing is successful, and if the signatures on both the signed workload data and Custom Token are verified,

sending (70), by the party, the Custom Token to the workload;
generating (34), by the workload and the party, a session key between them; and
establishing (35) an outbound secure channel between the party and the workload running into the HW TEE.

8. The method of claim 7, wherein the other data includes the workload public data, the workload public key, a signature for the workload public data, and the second nonce (NonceParty), and the RAS, after comparing the second attestation to the first attestation, verifies the signature for the workload public data before sending the Custom Token to the party.

9. The method according to claim 7, wherein the concatenation operation comprises:

concatenating the workload public key (KpubWL) with the second nonce (NonceParty) to produce a first output;
concatenating the first output with the first nonce (NonceRAS) to produce a second output;
performing a HASH of the second output thereby producing the first attestation (AttestationNonce) and the second attestation (AttestationNonce') according to said mixing, respectively.

10. The method according to claim 7, wherein the Custom Token is a JSON Web Token (JWT), or a JWT-like token, provided by the external third-party remote attestation service for attestation, and the method comprising:

configuring, by the party, a second party to accept the JWT, or JWT-like token;
generating, by the party, a token according to policies from the party;
signing, by the party, the token;
sending, by the party, the signed token to the workload; and

storing persistently, by the workload, the JWT, or JWT-like token.

11. The method according to any one of the preceding claims 7 to 10, further comprising the following steps for generating the session key by the workload and the party using a non-authenticated key-agreement protocol such as one based on a Elliptic Curve Diffie-Hellman, ECDH, protocol:

generating and sending, by the party, party public data to the workload;
generating, by the workload, public data and signing this public data using the private key;
sending, by the workload, the public data and the signed public data to the party;
verifying, by the party, the signed public data using the received public key; and
computing, by the workload and the party, a shared secret using party public data and public data, respectively.

12. The method according to any one of the preceding claims, wherein, once the outbound secure channel has been established between the party and the workload running into the HW TEE, the party further provisions the workload with secrets, thereby permitting a later re-opening of the outbound secure channel using the secrets stored by the workload for subsequent communication.

13. The method according to any one of the preceding claims 7 to 12, wherein the workload provides a web-service, the method further comprising:

signing, by the party, a certificate, such as a X.509 certificate private key, and
sending, by the party, the signed certificate to the workload which will use the certificate to establish connectivity, such as HTTPS connectivity, to the web-service.

FIG.1A

100

EP 4 675 976 A1

**FIG.1B**

107 — RAS

2 — Workload

1 — Party

108.1 — inbound

**FIG.1C**

2 — Workload

1 — Party

107 — RAS

108.2 — outbound

Party contacts Workload and sends a NonceParty — 11

Workload generates key pair: KpubWL/KprivWL — 12

Workload mixes KpubWL with the NonceParty thereby producing AttestationNonce — 13

Workload requests/receive NonceRAS from external 3rd party remote attestation service — 14

HW-TEE QE uses AttestationNonce (and NonceRAS) to produce WLQuoteReportSigned — 15

Workload sends WLQuoteReportSigned to request/receive Custom Token from RAS — 16

Workload sends the Custom Token with data to the Party — 17

Party computes its own attestation using NonceParty mixed with the received KpubWL thereby producing AttestationNonce' (prime) — 18

Party verifies AttestationNonce against AttestationNonce'(prime) and Workload public data signature — 19

Party finally verifies signature of Custom Token using NonceParty — 20

Workload and Party generate a session key — 21

22 — Secure inbound channel established

210

# FIG.2A

FIG.2B

```
┌─────────────────────────────────────┐
│ Workload contacts Party to request a │ ── 21
│         NonceRAS from RAS            │
└─────────────────────────────────────┘
                  │
                  ▼
┌─────────────────────────────────────┐
│ Party sends its NonceParty and NonceRAS │ ── 22
│           to the Workload           │
└─────────────────────────────────────┘
                  │
                  ▼
┌─────────────────────────────────────┐
│   Workload generates key pair:       │ ── 23
│         KpubWL/KprivWL              │
└─────────────────────────────────────┘
                  │
                  ▼
┌─────────────────────────────────────┐
│   Workload mixes KpubWL by way of a  │
│ concatentation operation thereby producing │ ── 24
│           AttestationNonce          │
└─────────────────────────────────────┘
                  │
                  ▼
┌─────────────────────────────────────┐
│  HW-TEE QE uses AttestationNonce (and │
│       NonceRAS) to produce          │ ── 25
│         WLQuoteReportSigned         │
└─────────────────────────────────────┘
                  │
                  ▼
┌─────────────────────────────────────┐
│ Workload sends WLQuoteReportSigned with a │ ── 26
│   request for a Custom Token from RAS │
└─────────────────────────────────────┘
                  │
                  ▼
┌─────────────────────────────────────┐
│ RAS computes its own attestation that mixes KpubWL │
│ by way of the same concatentation operation thereby │ ── 27
│      producing AttestationNonce' (prime)  │
└─────────────────────────────────────┘
                  │
                  ▼
┌─────────────────────────────────────┐
│   RAS verifies AttestationNonce against │
│ AttestationNonce'(prime) and Workload public data │ ── 28
│          signatures, and then        │
│        sends a Custom Token to Party │
└─────────────────────────────────────┘
                  │
                  ▼
┌─────────────────────────────────────┐
│ Party verifies Custom Token and sends it to the │ ── 28
│             Workload                │
└─────────────────────────────────────┘
                  │
                  ▼
┌─────────────────────────────────────┐
│ Workload and Party generate a session key │ ── 30
└─────────────────────────────────────┘
                  │
                  ▼
                                          220
┌─────────────────────────────────────┐
│      Secure outbound channel        │ 31
│           established               │
└─────────────────────────────────────┘
```

FIG.3A

320

# FIG.3B

HW TEE ⌐ 4

400

Workload ⌐ 2

Party ⌐ 1

Secure channel established

41

42

43

Sensitive data exchange 44

45

Secure channel stopped

# FIG.4

FIG.5

600

Establishing a secure channel backed by attestation 61

Payload generates a WorkloadID and KEY_INIT 62

Payload persistently stores KEY_INIT+ WorkloadID 63

Payload sends WorkloadID and KEY_INIT 64

Payload uses KEY_INIT to encrypt sensitive data 65

Workload persistently stores the encrypted data and the WorkloadID

66

FIG.6

HW TEE  4

Workload  2

Party  1

71
Secure channel established

700

72

73

74

75

76

77

78

FIG.7

## FIG.8

FIG.9

**FIG.10**

STORAGE MEDIUM    1400

COMPUTER EXECUTABLE
INSTRUCTIONS
1402

# FIG.11

COMPUTING PLATFORM    1500

PROCESSING
COMPONENT
1502

OTHER PLATFORM
COMPONENTS
1504

STORAGE
MEDIUM
1500

COMMUNICATIONS
INTERFACE
1506

# FIG.12

Europäisches
Patentamt

European
Patent Office

Office européen
des brevets

# EUROPEAN SEARCH REPORT

**Application Number**

EP 24 30 6095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 175 219 A1 (THALES DIS FRANCE SAS [FR]; THALES SA [FR]) 3 May 2023 (2023-05-03) * figure 2 * * figure 3 * * paragraph [0083] * * paragraph [0112] - paragraph [0115] * * paragraph [0120] - paragraph [0127] * ----- | 1-13 | INV. H04L9/40 H04L9/08 H04L9/32 G06F21/44 G06F21/57 G06F21/60 |
| A | EP 4 174 695 A1 (THALES DIS FRANCE SAS [FR]; THALES SA [FR]) 3 May 2023 (2023-05-03) * figure 2 * * figure 3 * * paragraph [0018] * * paragraph [0070] - paragraph [0083] * ----- | 1-13 | |
| A | US 2021/320789 A1 (MEDVINSKY ALEXANDER [US] ET AL) 14 October 2021 (2021-10-14) * figure 2 * * figure 5 * * paragraph [0048] - paragraph [0050] * * paragraph [0053] * * paragraph [0057] - paragraph [0059] * ----- | 1-13 | |

**TECHNICAL FIELDS SEARCHED (IPC)**

H04L
G06F

The present search report has been drawn up for all claims

| Place of search | Date of completion of the search | Examiner |
|---|---|---|
| Munich | 18 November 2024 | Caragata, Daniel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 30 6095

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | | Publication date | Patent family member(s) | | Publication date |
|---|---|---|---|---|---|
| EP 4175219 | A1 | 03-05-2023 | EP | 4175219 A1 | 03-05-2023 |
| | | | EP | 4423970 A1 | 04-09-2024 |
| | | | WO | 2023073200 A1 | 04-05-2023 |
| EP 4174695 | A1 | 03-05-2023 | EP | 4174695 A1 | 03-05-2023 |
| | | | EP | 4423646 A1 | 04-09-2024 |
| | | | WO | 2023073198 A1 | 04-05-2023 |
| US 2021320789 | A1 | 14-10-2021 | US | 2020304299 A1 | 24-09-2020 |
| | | | US | 2021320789 A1 | 14-10-2021 |

EPO FORM P0459

For more details about this annex : see Official Journal of the European Patent Office, No. 12/82

**REFERENCES CITED IN THE DESCRIPTION**

**Patent documents cited in the description**

- WO 2023073197 A
- WO 2023073198 A
- WO 2023073200 A
- US 20210117246 A1